# EUROPEAN PATENT APPLICATION

(11) **EP 1 300 761 A1**
(43) Date of publication of application: **09.04.2003**
(21) Application number: 01123267.5
(22) Date of filing: 04.10.2001
(51) Int. Cl.: G06F 9/445

(54) **Methods for upgrading or updating data and software on computers**

(71) Applicant: Tschabold, Brendan, 8600 Dübendorf (CH)
(72) Inventor: Tschabold, Brendan, 8600 Dübendorf (CH)
(74) Representative: Blum, Rudolf Emil Ernst

(57) **Abstract**

A mechanism is disclosed for upgrading or updating software and data on local computers (1) at a plurality of sites (2). Each local computer (1) is connected to the internet (4) and is designed to send upgrade and update requests from background processes. These processes are only activated when the internet is accessed anyway. For upgrading the computer's operating system, the new version is downloaded and stored in a manner that does not compromise the functionality of the currently running operating system, thereby allowing the user to continue his/her work without even noticing that a new operating system is downloaded. The new operating system will become active when the computer is restarted the next time. The mechanism can also be used for updating visual data to be displayed by a screensaver, or other types of local data.

## Description

Upgrading a computer's operating system usually involves the steps of obtaining an upgrade and running an upgrade installer. The installer requires all user applications to be quit prior to installation because it will overwrite resources used by the presently running operating system, thereby impairing its functionality. After installation of the upgrade, the computer has to be restarted.

This procedure is complicated and takes time. To alleviate the problem, modern operating systems can run an upgrade checking process automatically, e.g. after start-up or at a certain time, which checks via a network if an upgrade is available. If yes, it alerts the user that an upgrade should be installed. If the user authorizes installation of the upgrade, an installer process is run, and the upgrade is downloaded. Again, the installer will require all applications to be quit. Hence, the user still has to interrupt his work.

Often, computers belonging to certain site share common data stored locally on each computer. For example, all computers in a hotel may share a common home page that is used as default page for their web browser. If the URL of the home page changes, the local data has to be updated. To simplify this, the computers of a site can be connected by an LAN and the LAN can be used to update the local data. However, this requires dedicated software and server functionality in the LAN, the installation and operation of which requires skilled personnel that may not be available locally.

A further updating problem is related to screensavers. Screensavers are computer programs that display an image, video or other data on a computer's screen when the computer has not been used for a certain time. It has been recognized that it can be useful for the screensaver's display data to be downloaded from a network, in particular the Internet, e.g. for displaying automatically updated data.

However, screensavers that access the network automatically each time they run lead to an often undesired access to the network and increased network traffic.

A first problem to be solved by the present invention is to provide a method and a computer where upgrades interfere less with the work of the user.

This problem is solved by the method of claim 1. By downloading and installing the upgrade without impairing the functionality of the currently running operating system, the user can continue to work. The computer is set to use the new version of the operating system the next time it is started up. Hence, the user can finish his work and shut down normally. The next time the computer is started up, the new version of the operating system will be used.

Preferably, the upgrade checking process and downloading the upgrade runs in parallel to any application process of a user application. The application process is allowed to continue without restriction after downloading, i.e. the whole upgrade process is completely transparent to the user.

In a preferred embodiment, the computer is equipped with a first, non-volatile storage (preferably a programmable ROM) for storing an image of the operating system and a second storage (preferably RAM) for storing the data and code used by the currently running version of the operating system. During start up, the data and code for the currently running version of the operating system is generated in the second storage from the image in the first storage, and the upgrade is used for upgrading the image. System and user processes running after start-up access the second storage. Using two such separate storage means, one of which is not used by the running operating system, allows to ensure that the system can be upgraded without affecting running processes.

A second problem to be solved is to provide a method for updating data stored locally on a plurality of computers at a site in a simple manner. In particular, it should provide a means for keeping the local data up to date while keeping requirements of skilled personnel and dedicated resources low.

This problem is solved by the method of claim 6. The approach used here is to manage a plurality of differing sites simultaneously from a server. For this purpose, all computers are connected via a network (which may e.g. comprise a LAN at each site and a WAN connecting the sites). Each computer is attributed to a site and is programmed to contact the server with an update request. The upgrade request contains information that allows the server to derive the site the computer is attributed to. On the sever, a database is maintained that indicates the local data to be present on the computers of each site. The site derived from the update request is used for checking the database. If it is found that the local data of the requesting computer is not up to date for the given site, updated data is downloaded to the computer.

The database at the computer can e.g. comprise a directory structure with a directory for each site, or it can be a record-based database with data records for each site.

Preferably the update request is generated by an update checking process running on the computer. The update checking process is started automatically and runs parallel to any application processes started by the user, i.e. it is fully transparent to the user.

In a preferred embodiment, the local data comprises a default home page for a web browser. This helps to reduce traffic over the network because the web page accessed each time the browser is started up is stored locally. Still it allows to update the default home page easily by updating the database on the server.

Similarly, the local data can comprise image data controlling a display of a screen saver on the local computer. This allows to transparently download new image data to the computer, e.g. in the form of an advertisement to be displayed while the computer is not used.

Yet a further problem to be solved is to provide a method for updating the contents of a screensaver display over a network while keeping the impact on the network low.

This problem is solved by the method of claim 11. The screensaver is designed to access at least one local file for generating the screensaver display so that the screensaver can be activated without network access. In addition to this, an update checking process is run for updating the local file by querying a server over the network. The update checking process is only launched when the computer is found to access the network. This reduces undesired access to the network. When the computer is not using the network, e.g. because the computer is unused, no update queries are sent out. The computer is monitored for detecting when it accesses the network, e.g. by the update checking process or by patching system routines. Only when the network is accessed anyway, the update checking process will access the server.

This method is especially suited for updating advertising information to be used by the screen saver.

The present invention also relates to a computer or a software product comprising program means for carrying out the steps required in any of these methods.

Further preferred embodiments and applications of the present invention are disclosed in the dependent claims and in the following description, which description makes reference to the annexed figures. The figures show:
Fig. 1 a simplified block diagram of a computers in a plurality of sites interconnected by a network,
Fig. 2 a simplified block diagram of a site of Fig. 1,
Fig. 3 a block diagram of a simple computer,
Fig. 4 relevant data and program structures of the computer of Fig. 3 in operation,
Fig. 5 the steps for starting up the computer,
Fig. 6 a list of the local data,
Fig. 7 an example of a home page,
Fig. 8 the major steps of the upgrade process,
Fig. 9 the major steps of the update process, and
Fig. 10 an example of a directory structure at the server.

The following description discusses a specific application of the invention for a network of computers in hotels. It must be noted, though, that the concept can be applied to other situations, such as to a network of computers at internet cafes, schools, companies, etc.

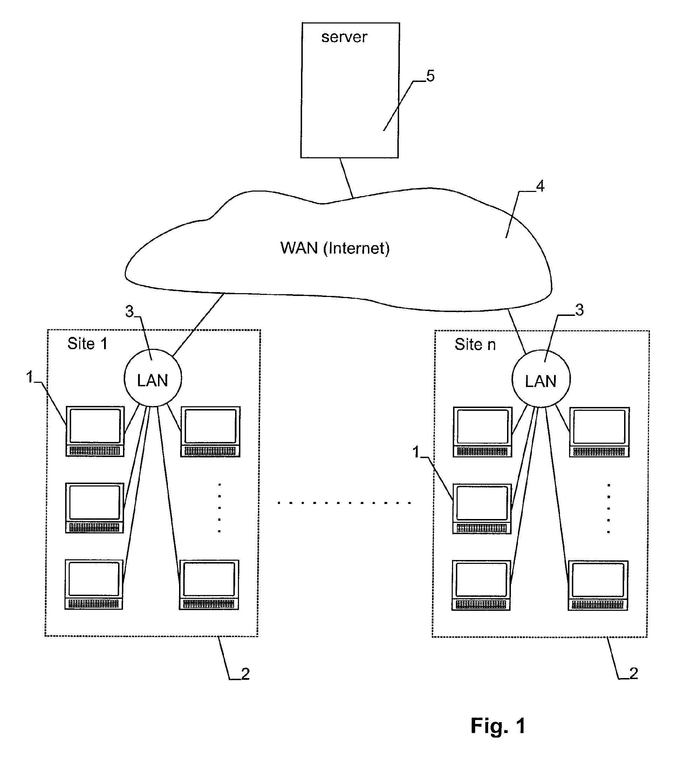

Fig. 1 shows a simplified block diagram with a plurality of computers 1 at a plurality of sites 2. Each site is equipped with an LAN (local area network) 3 interconnecting its local computers 1 and providing a connection to a WAN (wide area network) 4, usually the Internet. A server 5 is also connected to the WAN.

In terms of the specific application mentioned above, the sites 2 may e.g. correspond to individual hotels and the server 5 is operated by a internet service provider the hotels are subscribed to.

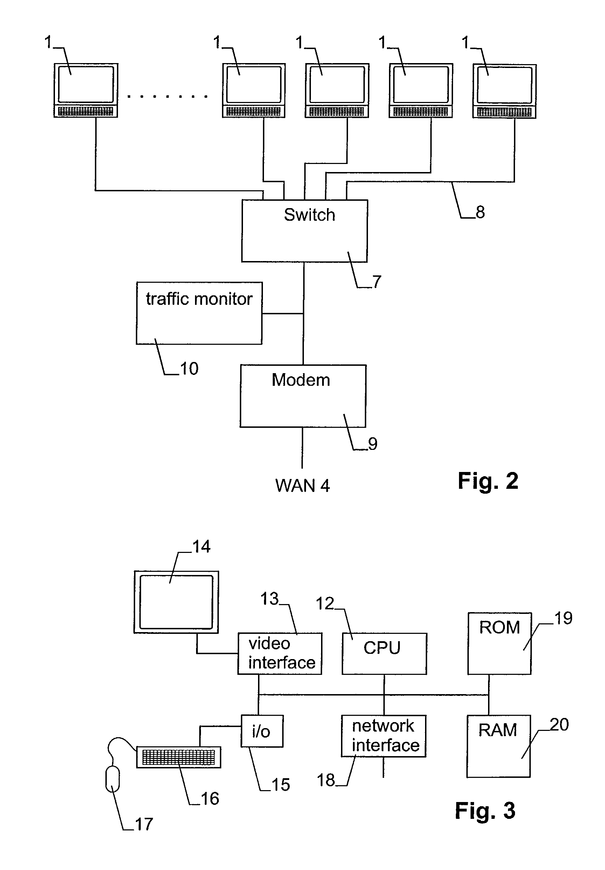

Fig. 2 shows a possible embodiment of the set-up at a single site. The site holds a plurality of the computers 1, which are connected to a central switch 7 by means of connecting lines 8. At least part of the computers 1 are located in hotel rooms to be used by the hotel's guests. The connecting lines 8 to the hotel rooms can e.g. be dedicated Ethernet connectors or general purpose phone lines. In the latter case, a modem will be located at each computer 1 and the data to switch 7 is preferably transferred using DSL or PNA transfer protocols that allow to use the phone lines for voice data at the same time.

Switch 7 is connected to a router and modem 9, which in turn is connected to WAN 4, e.g. using a DSL transfer protocol. The data between Switch 7 and modem 9 is monitored by a traffic monitor 10, which protocols the access of each computer 1 to the WAN, in particular for billing purposes. Such devices are known to the person skilled in the art.

A block diagram of a simple computer, such as it could e.g. be used in a hotel room, is shown in Fig. 3. It is of conventional design but without hard disk and comprises a CPU 12 that is connected to a video interface 13 driving a display 14, an input/output interface 15 for communication with a keyboard 16 and other input or output hardware 17 and a network interface 18 for connection to the LAN 7. Furthermore, the computer is equipped with a non-volatile, ROM 19 and a volatile RAM 20. At least part of ROM 19 can be programmed by CPU 12.

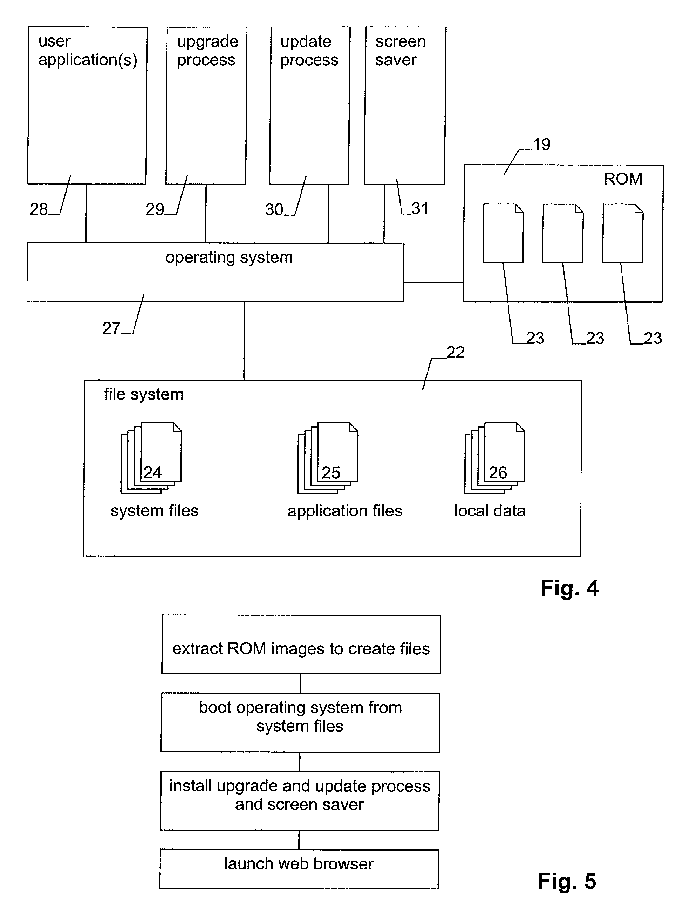

Fig. 4 shows the relevant data and program structures of the computer when running. The computer is shown to have a file system 22, which can e.g. be maintained in RAM 20. The file system 22 can comprise a plurality of system files 24 containing code and data used by a currently running operating system 27, one or more application files 25 with code and data for applications that can be invoked by the user, and local data files 26. The system files 24, the application files 25 and at least part of the local data files 26 are created during start-up from image data 23 stored in ROM 19. The image data 23 can e.g. contain a compressed and packaged version of the files to be created in file system 22.

RAM 20 further holds the run-time code and data for currently running processes. Part of them form the computer's operating system 27 providing various services and API's in conventionally known manner. Furthermore, RAM 20 holds the run-time code and data for application programs 28 started by the user as well as for an upgrade process 29, an update process 30, and a screensaver 31, the functions of which will be explained below.

The major steps during start-up of the computer are shown in Fig. 5. First, the images 23 from ROM 19 are extracted and their data is stored in RAM 20 for creating the files of file system 22. Then the operating system 27 is started up from the system files 24. The upgrade and update processes 29, 30 and the screen saver 31 are installed, e.g. also from data stored in the system files 24. Finally, a web browser is started from the application files and run as a user application 28.

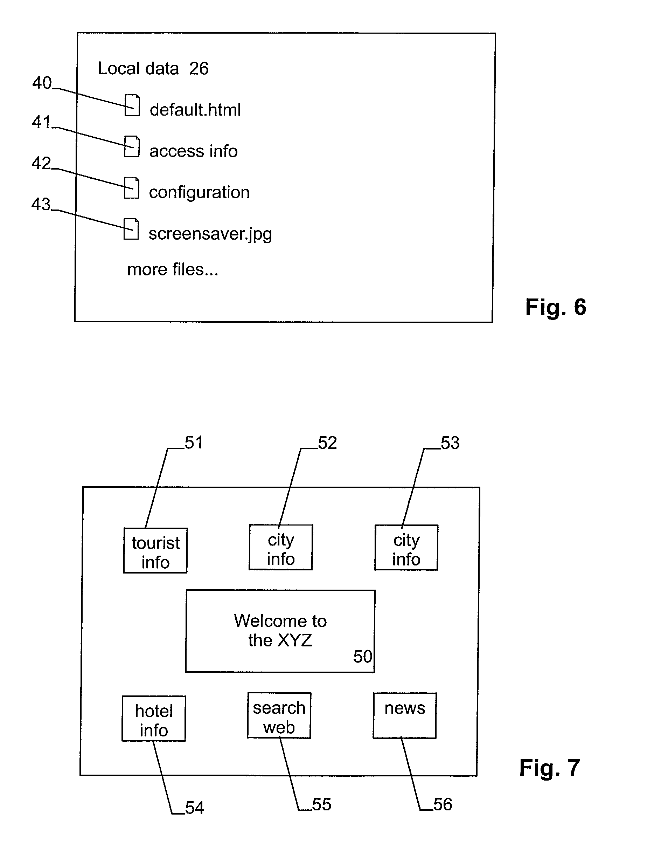

The default page to be displayed by the web browser is fully stored in one or more of the files of the local data 26, e.g. a file 40 named default.html, as shown in Fig. 6. The page may e.g. look as shown in Fig. 7 and contain the hotel's logo or name 50 and several links 51 - 56.

Since the file or files 40 required for generating the default page are part of the local data 26 of the computer, the default page can be displayed without accessing the network.

When the user activates one or more of the links 51 - 56 or manually enters an URL for an external web page, a connection to the network is established. In general, most or all services accessed by the web browser will be available through WAN 4. In particular, the links 51 - 56 may refer to pages hosted for the particular site (hotel) on server 5.

When the user accesses LAN 3 and WAN 4, usually by selecting a link from the default page or by entering a specific URL in the browser, a dedicated code started by the operating system checks if the desired IP address is an address on server 5. If yes, access is granted immediately. If no, access is only granted after displaying one or two warning messages to the user, notifying him that he will be billed for the access. The IP address or addresses that are allowed for free access as well as the text of the warning messages are stored as one or more files 41 of the local data 26.

In addition to this, accessing an external IP address will activate the upgrade and update processes 29, 30 (which may also be combined in a single process). Both processes run in the background, i.e. they are running concurrently with the user application and have no user interface, hence the user will not be affected by them.

Both processes access a configuration file 42 of the local data 26. This configuration file can e.g. be a text file containing various information controlling the operation of the computer, such as a proxy address or the URL of a preferred search site. It also contains an update URL and an upgrade URL.

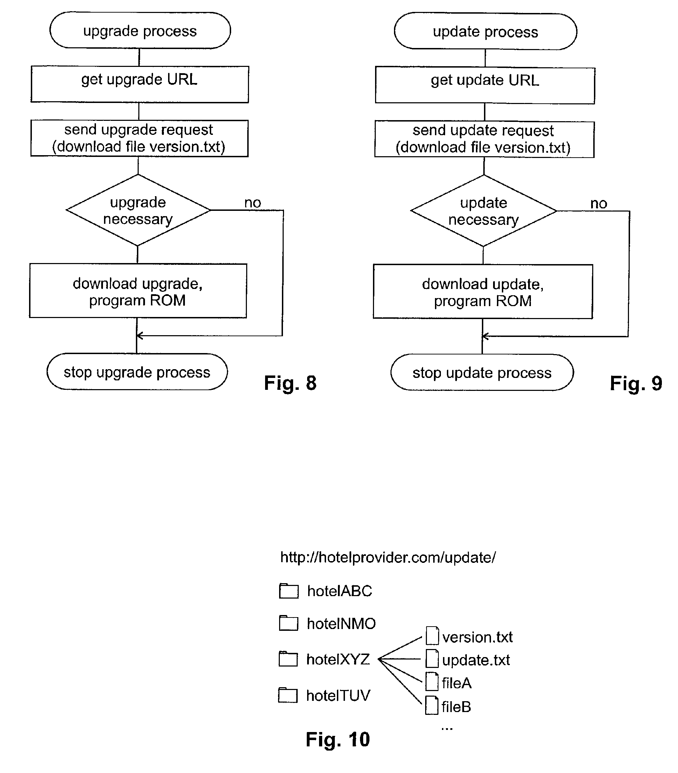

The following describes the operation of the upgrade process, the major steps of which are also depicted in Fig. 8.

The upgrade URL may e.g. look as follows:
http://hotelprovider.com/upgrade/trmAA/
which resolves to a directory on server 5. "trmAA" (which may be stored as part of the upgrade URL in configuration file 42 or which may be generated by the upgrade process on-the-fly) is specific for the type and brand of computer 1.

Using this URL, the upgrade process appends a file name to form the URL of a file to be downloaded, e.g.
http://hotelprovider.com/upgrade/trmAA/version.txt

A request for sending this file is sent as an "upgrade request" to server 5 and the file is downloaded. It contains the version number of the most up-to-date version of the operating system for the given type and brand of computer. The version number of this file is compared to the version number of the operating system stored in the image files 23 of ROM 19. The two version numbers are compared by the upgrade process. If the version number from the file version.txt is more recent that the one of the currently installed system, the upgrade process generates the URL of a second file, e.g.
http://hotelprovider.com/upgrade/trmAA/image.bin

The file "image.bin" is downloaded by the upgrade process. It contains the binary data for creating the image or images 23 in ROM 19 that are used during start-up for generating the system files 24. This binary data is programmed into ROM 19. Then the upgrade process stops.

After the upgrade is finished, the computer is left running without restrictions. The new version of the operating system is not used by the currently running version of the operating system, and therefore the functionality of the latter is not impaired.

However, next time when the computer is restarted, the new operating system will be loaded from ROM 19 automatically.

As can be seen from Fig. 9, update process 30 works similar to upgrade process 29. Again, the process is activated when the computer accesses an external IP address. First, the process retrieves an update URL stored in configuration file 42. This update URL may e.g. look like this:
http://hotelprovider.com/update/hotelXYZ/.

This URL again resolves to server 5, namely to a directory unique for each hotel subscribing to the server.

The section "hotelXYZ" indicates the hotel (site) the computer belongs to. An example for the directory structure of server 5 that can be accessed through hotelprovider.com/update/ is shown in Fig. 10. As can be seen, the server comprises a dedicated directory of each hotel (site) that is subscribed to it. Each directory in turn holds one file called version.txt, one file called update.txt, and a plurality of further files (fileA, fileB, etc.). The file version.txt contains the up-to-date version number (or any other suited type of version indictator) of the local data that should be present on the computer.

The directory structure of Fig. 10 and the file version.txt represent a database indicative of the latest version of the local data for the computers at each subscribing hotel (site).

This scheme allows server 5 to maintain, for each hotel (site), individual update information, thereby allowing each hotel to customize the local data on its computers without affecting the local data on computers of other hotels.

When checking for updates, a request ("update request") to send the file
http://hotelprovider.com/update/hotelXYZ/version.txt
is dispatched by the update process to server 5 and the file version.txt is downloaded. The contents of the file are compared by the update process to the version number of the local data stored on the computer (the latter e.g. being stored in configuration file 42). If the local data on the computer is found to be obsolete, a request for the file
http://hotelprovider.com/update/hotelXYZ/update.txt
is sent to the server and the file update.txt is downloaded. This file contains the following entries
fileA -> \windows\foo\bar
fileB -> \windows\no\way
...
which tells where the individual files fileA, fileB etc. are to be installed. This file is parsed and the corresponding files fileA, fileB, etc. are downloaded from server 5 to the computer. These files are used for updating the image or images 23 in ROM 19 that are used during start-up for generating the local data 26. The changed image or images are programmed into ROM 19. Depending on how the local data 26 is accessed and used by the operating system and the user application(s), it may further be possible to update the local data 26 in RAM immediately. Alternatively, the new local data will be used after the system is restarted.

When the update is complete, update process 30 is stopped.

As will be noted, the local data 26 also contains the configuration file 42. Hence, after an update, the update URL will automatically contain the new version number of the local data.

By updating the local data 26, it is also possible to update any other file shown in Fig. 6.

One of these files is a file 43 called "screensaver.jpg". This file contains the image to be displayed by the screensaver 31 when the same becomes active. It may be a jpeg file or any other file or group of files that can be used for generating the screensaver display, such as graphics or multimedia data. Preferably, the file 43 contains advertising information.

The update mechanism therefore also allows to update the image to be displayed by the screensaver.

In the example discussed here, when updating the local data all of it is updated. However, it may also be split into parts that can be updated separately. The update process will then query the server for an update for each part of the local data, and download corresponding updates if necessary. This may make it e.g. possible to download a new version of the file 43, screen-saver.jpg, without affecting any other files of the local data.

From the above it becomes clear that upgrading and updating operations are completely transparent to the user. In addition to this, they only take place when the user is accessing the WAN anyway, which reduces network load.

As will be clear to a person skilled in the art, the implementation details of the mechanisms shown here can vary. For example, the URLs shown above may be designed not to access single files on server 5 but to query a database application running there, or another mechanism may be used for sending the data of the upgrade or update requests to server 5.

The present invention may be implemented as a computer or a program, or a combination of both, designed for carrying out all necessary steps.

## Claims

1. A method for automatically upgrading at least part of an operating system software of a computer (1), wherein the computer is connected to a network (3, 4), comprising the steps of
starting up the computer (1) from a first version of an operating system software stored in the computer,
automatically activating an upgrade checking process (29) on the computer,
sending an upgrade query from the upgrade checking process (29) through the network (3, 4) to a server (5),
receiving, from the server (5), information indicative if an upgrade for said first version is available,
wherein, if an upgrade is available, said method is further **characterized by** the following steps
downloading the upgrade and installing it on the computer to generate a second version of the operating system software without impairing the functionality of the first version of the operating system software currently running and setting the computer (1) to start up from the second version of the operating system software in a next start up, and
continuing an operation of the computer (1) after downloading the upgrade under the first version of the operating system until a shut down is initiated by the user.

2. The method of claim 1 wherein on the computer (1) there is stored at least one user application (25) wherein the upgrade checking process (29) and downloading the upgrade runs in parallel to any application process (28) running for the user application (25) and wherein the application process (28) is allowed to continue without restriction after downloading the upgrade.

3. The method of any one of the preceding claims comprising the steps of
checking when a user of the computer accesses the network (3, 4), and in particular accesses an IP address on the Internet, and
activating the upgrade checking process only when the user accesses the network.

4. The method of any one of the preceding claims wherein the computer (1) comprises a first, non-volatile storage (19) for storing an image (23) of the operating system and a second storage (20) for storing any data and code (24) used by a currently running operating system (27), wherein during start-up of the computer (1) the data and code (24) is generated in said second storage (20) from said image (23) in the first storage (19), and wherein upgrade is used for upgrading said image (23).

5. The method of claim 4 wherein said first storage (19) is a programmable ROM and said second storage (20) is RAM.

6. A method for updating data (26) stored locally on a plurality of computers (1) at a plurality of sites, wherein the computers are connected via a network (3, 4) to a server (5), wherein each computer (1) is attributed to a site (2) and is programmed to contact the server (5) with an update request, **characterized in that** the update request comprises information indicative of the site (2) a requesting computer is attributed to, the method comprising the steps of
maintaining a database on the server (5) indicative of the data to be present at the computers of each site (2),
accessing the database using the site (2) derived from the update request for checking if the requesting computer needs to update its data, and, if yes, downloading updated data to the requesting computer.

7. The method of claim 6 wherein each computer (1) is programmed to automatically start an update checking process (30) that runs in parallel to any user started application processes (28) running on the computer, wherein said update checking process (30) is designed for generating the update request.

8. The method of any one of the claims 6 or 7 wherein said local data (26) comprises a default home page for a web browser.

9. The method of any one of the claims 6 to 8 wherein a version indicator is attributed to the local data (26), wherein the database stores information regarding a most recent version indicator for each site (2).

10. The method of any one of the claims 6 to 9 wherein the local data (26) comprises image information to be displayed by a screensaver (31) on the local computer.

11. A method for updating data to be displayed on a screensaver (31) on a computer (1) connected to a network comprising, wherein the screensaver (31) accesses at least one local file for generating a screensaver display when the computer (1) is unused, the method **characterized by** the step of automatically running an update checking process (31) on the computer (1), said update checking process (31) querying a server (5) connected to the network for an updated version of the local file and downloading an update for the local file if necessary, wherein the computer (1) is monitored for an access of the network and the update checking process queries the server (5) only when computer accesses the network.

12. The method of claim 11 wherein the display comprises advertising information.

13. The method of any one of the claims 11 or 12 wherein the update checking process (31) is only activated when the computer accesses the Internet, and wherein the server (5) is accessed over the Internet.

14. A computer or a program product comprising program means for carrying out the steps of any one of the preceding claims.
